(19) Europäisches Patentamt / European Patent Office / Office européen des brevets

(11) **EP 4 323 417 B1**

(12) **EUROPEAN PATENT SPECIFICATION**

(45) Date of publication and mention
of the grant of the patent:
**25.09.2024  Bulletin 2024/39**

(21) Application number: **23721846.6**

(22) Date of filing: **21.04.2023**

(51) International Patent Classification (IPC):
**C08F 283/06** (2006.01)    **C08F 2/08** (2006.01)
**C08G 18/63** (2006.01)    **C08G 18/76** (2006.01)
**C08J 11/26** (2006.01)

(52) Cooperative Patent Classification (CPC):
(C-Sets available)
**C08F 2/08; C08F 283/065; C08G 18/636;**
**C08G 18/7621; C08J 11/26;** C08G 2110/0083;
C08G 2261/73; C08J 2375/04; C08L 2207/20

(Cont.)

(86) International application number:
**PCT/EP2023/060396**

(87) International publication number:
**WO 2023/203182 (26.10.2023 Gazette 2023/43)**

(54) **DISPERSANT FOR PRODUCING POLYOL DISPERSIONS FROM POLYURETHANE WASTE**

DISPERGIERMITTEL ZUR HERSTELLUNG VON POLYOLDISPERSIONEN AUS
POLYURETHANABFÄLLEN

DISPERSANT POUR LA PRODUCTION DE DISPERSIONS DE POLYOLS À PARTIR DE DÉCHETS
DE POLYURÉTHANNE

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**

(30) Priority:  **22.04.2022  EP 22382384**

(43) Date of publication of application:
**21.02.2024  Bulletin 2024/08**

(73) Proprietor: **Repsol, S.A.**
**28045 Madrid (ES)**

(72) Inventors:
• **MUÑOZ DE DIEGO, César**
  **28935 Móstoles - Madrid (ES)**
• **PÉREZ VALENCIA, Juan Pedro**
  **28935 Móstoles - Madrid (ES)**
• **CARAZO ANGULO, José Antonio**
  **28935 Móstoles - Madrid (ES)**
• **GARCÍA RAMOS, Susana**
  **28935 Móstoles - Madrid (ES)**
• **DOMÍNGUEZ RAMOS, Enrique**
  **28935 Móstoles - Madrid (ES)**

(74) Representative: **ABG Intellectual Property Law,
S.L.**
**Avenida de Burgos, 16D**
**Edificio Euromor**
**28036 Madrid (ES)**

(56) References cited:
**EP-A1- 1 589 051    EP-A2- 0 091 036**
**EP-A2- 1 932 864    WO-A1-2018/091568**

(52) Cooperative Patent Classification (CPC): (Cont.)

C-Sets
**C08F 283/065, C08F 220/06**

## Description

### FIELD OF THE INVENTION

The invention relates to the use of polymers obtained by polymerization of ethylenically unsaturated acids or anhydrides onto unsaturation-containing polyether polyols for producing polyol dispersions by acidolysis of polyurethane waste, as well as to the use of the resulting polyol dispersions for producing polyurethanes.

### BACKGROUND

Very high quantities of polyurethane waste from the post-consumer sector (mattresses, automobile seats, sofas, cushions, upholstery, etc.) are disposed of every year. Further, during the processing of polyurethane block foams, polyurethane waste is also generated, which is sometimes disposed of.

It is therefore desirable to recycle these materials as far as possible and return them to the raw materials circuit in an ecological and economical process.

Chemical conversion of polyurethanes by means of water (hydrolysis), amines (aminolysis), alcohols (alcoholysis) and acids or anhydrides (acidolysis) has been proposed in order to convert polyurethanes into recycled polyols.

DE 19512778 C1 refers to the acidolysis of polyurethane waste with dicarboxylic acids or anhydrides. This document discloses the use of polyether polyols grafted with ethylenically unsaturated monomers containing carbonyl groups in order to obtain stable polyol dispersions.

DE 102013106364 A1 also discloses the acidolysis of polyurethane foams in the presence of grafted polyether polyols. The use of specific duplex steel is proposed in this document in order to produce a high quality recycled polyol.

WO2018/091568 A1 is directed to a method for the acidolysis of polyurethane waste, wherein the resulting polyols are subjected to a reaction with a short-chain diol or triol to increase their hydroxyl number and reduce their acid number.

Unsaturation-containing polyether polyols grafted with ethylenically unsaturated monomers have been reported in the prior art (e.g. GB1450511, US4454255, US4522976, GB2197657, EP1589051). However, these polyols have not been disclosed as suitable dispersants or stabilizers for polyols resulting from the acidolysis of polyurethanes.

Despite the methods for preparing recycled polyols disclosed in the prior art, there is still room for improvement. In this regard, further effective methods for preparing polyol dispersions from waste polyurethanes are desirable.

### BRIEF DESCRIPTION OF THE INVENTION

The authors of the present invention have found that polymers obtained by: (i) reacting a polyether polyol with an unsaturated dicarboxylic acid or anhydride to provide an unsaturation-containing polyol, and (ii) grafting an ethylenically unsaturated acid or anhydride onto the unsaturation-containing polyol, can be advantageously used as dispersants or stabilizers of the (recycled) polyols obtained by acidolysis of (waste) polyurethanes.

Indeed, these polymers have been found to provide polyol dispersions with improved particle size and/or viscosity compared to polyol dispersions obtained by acidolysis of polyurethanes using a polymer resulting from the direct grafting of an ethylenically unsaturated acid onto the polyether polyol (without prior introduction of unsaturation), as disclosed in the prior art. These polyol dispersions present a very good stability and particle size for their subsequent use as raw material in the preparation of polyurethanes.

In addition to the very good stability and particle size, the resulting polyol dispersions also have a suitable (low) viscosity for their subsequent use in the manufacture of new polyurethanes. In particular, said viscosity allows its subsequent handling, pumping and blending with the other components to prepare new polyurethanes. In contrast, when polyol dispersions with a very high viscosity are obtained, they do not have proper processability for their use in the industrial manufacture of polyurethanes. Additionally, since no further dilution of the polyol dispersion would be needed to achieve a viscosity suitable for its processability in the manufacture of polyurethanes, this would allow the incorporation of a higher amount of the recycled polyol in the new polyurethanes.

Further, the polymers of the invention have been found to be very effective dispersants for this type of polyols and so can be used in very low amounts in the acidolysis process. Consequently, they provide a very efficient and economical method for the recycling of high amounts of polyurethanes into stable polyol dispersions using a low amount of dispersant.

In particular, it has been found that stable polyol dispersions are obtained even when the polymer of the invention is used as dispersant in an amount of about 2 wt% based on the total mass of all constituents (starting materials) used in the acidolysis. In contrast, DE 19512778 C1 and WO 2018/091568 A1 disclose the use of the dispersants therein (without induced unsaturation before grafting) in an amount of more than 20 wt% based on the total mass of all constituents used in the acidolysis. This high amount of dispersant increases the cost of the process and also highly reduces the amount of polyurethane waste that can be recycled per reaction, which results in a less economical process.

Thus, in a first aspect the invention is directed to the use of the polymer of the invention as dispersant or stabilizer in the acidolysis of polyurethanes.

In another aspect, the invention is directed to the use of the polymer of the invention for preparing polyol dispersions by acidolysis of polyurethanes.

The polymer of the invention is a polymer obtainable by a process comprising:

i) reacting a polyether polyol having a hydroxyl functionality of 2-6 and a number average molecular weight of 300-15.000 Da, with an unsaturated dicarboxylic acid or anhydride selected from maleic anhydride, maleic acid, fumaric acid and mixtures thereof, in a molar ratio of the unsaturated dicarboxylic acid or anhydride to the polyether polyol from 0.1 to x:1.0 wherein x is the hydroxyl functionality of the polyether polyol minus 1, followed by reaction with an alkylene oxide, to provide an unsaturation-containing polyether polyol; and

ii) reacting the resulting unsaturation-containing polyether polyol with an ethylenically unsaturated acid or anhydride monomer in the presence of a radical initiator.

In a third aspect, the invention is directed to a process for producing a polyol dispersion from polyurethane, wherein the process comprises reacting the polyurethane with a dicarboxylic acid or anhydride in the presence of the polymer of the invention at a temperature of from 150°C to 250°C.

In a fourth aspect, the invention relates to a polyol dispersion obtainable by the process defined in the third aspect.

In a fifth aspect, the invention relates to the use of the polyol dispersion according to the fourth aspect, for the manufacture of polyurethanes.

In a sixth aspect, the invention relates to a process for preparing polyurethanes which comprises reacting the polyol dispersion according to the fourth aspect with a polyisocyanate.

In a further aspect, the invention is directed to the polyurethane obtainable by the process of the sixth aspect.

## DETAILED DESCRIPTION OF THE INVENTION

Unless defined otherwise, all technical and scientific terms used herein have the same meaning as commonly understood to one of ordinary skill in the art to which this disclosure belongs. As used herein, the singular forms "a" "an" and "the" include plural reference unless the context clearly dictates otherwise.

The terms "comprising", "comprise" and variations thereof, encompass the terms "consist(ing) essentially of" and "consist(ing) of". Thus, at each occurrence in the present application, the terms "comprising", "comprise" and variations thereof, may be replaced with the terms "consist(ing) essentially of" and "consist(ing) of".

When a range is indicated in the present document, both lower and upper limits are included in said range.

When the amount of a component is given by a range with a lower limit of 0 or 0.0, this means that said component might not be present or it might be present in an amount not higher than the specified upper limit of the range.

As used herein, the term "wt%" means weight-weight percent (w/w).

As used herein, the term "mol%" means mole-mole percent (mol/mol).

When the amount or ratio of a particular component is disclosed herein, said amount or ratio is based on the total amount of said component. For example, if a mixture of two or more unsaturated dicarboxylic acids or anhydrides are used, the amount or ratio of the dicarboxylic acid or anhydride disclosed herein is based on the total amount of all the unsaturated dicarboxylic acids or anhydrides used.

The skilled person readily understands that, when a composition is defined by the weight percentage values of all the components it comprises, these values can never sum up to a value which is greater than 100%. The amount of all components that said composition comprises adds up to 100% of the weight of the composition.

For the purposes of the invention the expressions "obtainable", "obtained" and equivalent expressions are used interchangeably, and in any case, the expression "obtainable" encompasses the expression "obtained".

Unless specifically stated otherwise, or unless they are clearly incompatible, all the embodiments disclosed in relation to an aspect of the invention are also applicable to the other aspects. Also, any combination of the embodiments and preferences described herein is encompassed by the present invention unless otherwise indicated herein, or otherwise clearly contradicted by context.

It should be understood that the scope of the present disclosure includes all the possible combinations of embodiments disclosed herein, either belonging to the same aspect or to different aspects of the invention.

The polymer of the invention can be obtained by a process comprising:

i) reacting a polyether polyol having a hydroxyl functionality of 2-6 and a number average molecular weight of 300-15.000 Da, with an unsaturated dicarboxylic acid or anhydride selected from maleic anhydride, maleic acid, fumaric acid and mixtures thereof in a molar ratio of the unsaturated dicarboxylic acid or anhydride to the polyether polyol is from 0.1:1 to x:1, wherein x is the hydroxyl functionality of the polyether polyol minus 1, followed by reaction with an alkylene oxide, to provide an unsaturation-containing polyether polyol; and

ii) reacting the unsaturation-containing polyether polyol obtained in step i) with an ethylenically unsaturated acid or anhydride monomer in the presence of a radical initiator.

The polyether polyol used to prepare the polymer of the invention is a polyol having ether groups within the polymer chain, also usually referred to as polyalkylene polyether polyol, having a hydroxyl functionality of 2-6 and a number average molecular weight of 300-15.000 Da.

In an embodiment, the polyether polyol is the product of polymerization of alkylene oxides having from 2 to 4 carbon atoms (e.g. ethylene oxide, propylene oxide, butylene oxide and mixtures thereof) in the presence of a starting compound having 2-6 active hydrogen atoms.

Suitable starting compounds for the obtention of the polyether polyol include, for example, polyhydroxyl compounds such as ethylene glycol, propylene glycol, 1,3-dihydroxypropane, 1,3-dihydroxybutane, 1,4-dihydroxybutane, 1,4-, 1,5-, 1,6-dihydroxyhexane, 1,2-, 1,3-, 1,4-, 1,6-, 1,8-dihydroxyoctane, 1,10-dihydroxydecane, 1,2,4-trihydroxybutane, 1,2,6-trihydroxyhexane, 1,1,1-trimethyl-olethane, 1,1,1-trimethylol propane, glycerol, sorbitol, pentaerythritol, xylitol, arabitol, mannitol, glucose, sucrose and the like. By alkoxylation of the starter, a suitable polyether polyol can be formed. The alkoxylation reaction may be catalysed using any conventional catalyst including, for example, potassium hydroxide or a double metal cyanide (DMC) catalyst.

Therefore, polyether polyols suitable to prepare the polymer of the invention include alkylene oxide adducts of ethylene glycol, propylene glycol, 1,3-dihydroxypropane, 1,3-dihydroxybutane, 1,4-dihydroxybutane, 1,4-, 1,5-, 1,6-dihydroxyhexane, 1,2-, 1,3-, 1,4-, 1,6-, 1,8-dihydroxyoctane, 1,10-dihydroxydecane, 1,2,4-trihydroxybutane, 1,2,6-trihydroxyhexane, 1,1,1-trimethyl-olethane, 1,1,1-trimethylol propane, glycerol, sorbitol, pentaerythritol, xylitol, arabitol, mannitol, glucose, sucrose and the like; particularly adducts of alkylene oxides having from 2 to 4 carbon atoms.

According to an embodiment, when the polyether polyol is the product of polymerization of two or more, such as two or three, alkylene oxides, the alkylene oxides may be added simultaneously or sequentially so that the polyether polyol has internal blocks, terminal blocks or a random distribution of different oxyalkylene groups.

Examples of suitable polyether polyols include polyoxyethylene diols, triols, tetrols, pentols and hexols; polyoxypropylene diols, triols, tetrols, pentols and hexols; and mixtures thereof.

When ethylene oxide and propylene oxide mixtures are used to produce the polyether polyol, the ethylene oxide and propylene oxide may be added simultaneously or sequentially so that the polyether polyol has internal blocks, terminal blocks or a random distribution of oxyethylene groups and/or oxypropylene groups.

In an embodiment, the polyether polyol is built up of propylene oxide units, ethylene oxide units, or mixtures thereof. That is, the polymeric part of the polyether polyol (i.e. excluding the starting compound) consists only of propylene oxide units, ethylene oxide units, or mixtures thereof. Therefore, it is a poly(ethylene oxide and/or propylene oxide).

In a further embodiment, the polyether polyol is built up of propylene oxide and ethylene oxide units; that is, it is a propylene oxide-ethylene oxide copolymer. In an embodiment, the polyether polyol is a random or blocked propylene oxide-ethylene oxide copolymer with or without ethylene oxide terminal (cap) groups.

In another embodiment, the polyether polyol is a propylene oxide polymer with ethylene oxide terminal groups.

Therefore, the polyether polyol may be a propylene oxide homopolymer or an ethylene oxide homopolymer or a random or blocked propylene oxide-ethylene oxide copolymer with or without ethylene oxide terminal groups.

In a particular embodiment, the polyether polyol is a poly(ethylene oxide and/or propylene oxide) adduct of a polyhydric alcohol, particularly a polyhydric alcohol selected from ethylene glycol, propylene glycol, 1,3-dihydroxypropane, 1,3-dihydroxybutane, 1,4-dihydroxybutane, 1,4-, 1,5-, 1,6-dihydroxyhexane, 1,2-, 1,3-, 1,4-, 1,6-, 1,8-dihydroxyoctant, 1,10-dihydroxydecane, glycerol, sorbitol, 1,1,1-trimethylol propane, 1,2,4-trihydroxybutane, 1,2,6-trihydroxyhexane, 1,1,1 -trimethyl-olethane, pentaerythritol, xylitol, arabitol, mannitol, glucose and sucrose; more particularly, from glycerol and sorbitol.

In an embodiment, the polyether polyol is built up of propylene oxide monomers and 0-95 wt%, or even 0-75 wt%, of ethylene oxide monomers based on the weight of the monomers (propylene oxide+ethylene oxide monomers). In an embodiment, the polyether polyol is built up of propylene oxide and 0-50 wt%, or even 0-30 wt%, of ethylene oxide based on the weight of the monomers (propylene oxide+ethylene oxide monomers). In an embodiment, the polyether is a propylene oxide homopolymer, i.e. it is built up of propylene oxide units or monomers.

In another embodiment, the polyether polyol is built up of ethylene oxide monomers and 0-95 wt%, or even 0-75 wt%, of propylene oxide monomers based on the weight of the monomers (propylene oxide+ethylene oxide monomers). In another embodiment, the polyether polyol is built up of ethylene oxide and 0-50 wt%, or even 0-30 wt%, of propylene oxide based on the weight of the monomers (propylene oxide+ethylene oxide monomers). In an embodiment, the polyether polyol is an ethylene oxide homopolymer, i.e. it is built up of ethylene oxide units or monomers.

In an embodiment, the polyether polyol is built up of propylene oxide and ethylene oxide and comprises 5-95 wt% of propylene oxide monomers and 5-95 wt% of ethylene oxide monomers, based on the weight of the monomers (propylene oxide+ethylene oxide monomers. In an embodiment, the polyether polyol is built up of propylene oxide and ethylene oxide and comprises 5-50 wt%, or even 8-30 wt%, of ethylene oxide, based on the weight of the monomers (propylene oxide+ethylene oxide monomers). In a particular embodiment, the polyether polyol is a propylene oxide polymer comprising 5-50 wt%, or even 8-30 wt%, of polyethylene oxide terminal groups, based on the weight of the monomers (propylene oxide+ethylene oxide monomers). In a further embodiment, the polyether polyol is propylene oxide adduct of glycerol or sorbitol comprising 5-50 wt%, or even 8-30 wt%, of polyethylene oxide terminal groups, based on the weight of the monomers (propylene oxide+ethylene oxide monomers). In some embodiments, the content of ethylene oxide in the polyethylene oxide and propylene oxide) polymer is 10-25 wt% based on the weight of the monomers. The ethylene oxide and propylene oxide content can be determined, for example, by $^{13}$C-NMR.

The polyether polyol may have hydroxyl functionality of 2, 3, 4, 5 or 6. In an embodiment, it has a functionality of 3 to 6. In a particular embodiment, it has a functionality of 3 to 5, or even of 3-4. In another embodiment, it has a functionality of 3. In another embodiment, it has a functionality of 2-5, or even of 2-4.

In an embodiment, the polyether polyol has a molecular weight from 1.000 to 15.000 Da. In an embodiment, it has a molecular weight from 2.000 to 15.000 Da., or even from 3.000 to 13.000 Da. According to an embodiment, the polyether polyol has a molecular weight from 3.000 to 8.000 Da, or even from 4.000 to 6.000 Da.

In further embodiments, the polyether polyol has a hydroxyl number in the range from 15 to 100 mgKOH/g, or even from 20 to 60 mgKOH/g.

In accordance with particular embodiments, the polyether polyol has a viscosity from 200 to 8.000 mPa s. In further embodiments, is has a viscosity from 400 to 5.000 mPa s, or even from 500 to 2.000 mPa s.

In a particular embodiment, the polyether polyol has hydroxyl functionality of 3 and a molecular weight from 2.000 to 15.000 Da.

According to an embodiment, the polyether polyol is a poly(ethylene oxide and/or propylene oxide) polymer having a hydroxyl functionality of 3.

In another embodiment, the polyether polyol is a poly(ethylene oxide and/or propylene oxide) polymer having a molecular weight from 2.000 to 15.000 Da.

In a further embodiment, the polyether polyol is a polyethylene oxide and/or propylene oxide) polymer having a hydroxyl functionality of 3 and a molecular weight from 2.000 to 10.000 Da.

In a particular embodiment, the polyether polyol is a poly(ethylene oxide and/or propylene oxide) adduct of a polyhydric alcohol selected from glycerol, sorbitol, 1,1,1-trimethylol propane, 1,2,4-trihydroxybutane, 1,2,6-trihydroxyhexane, 1,1,1-trimethyl-olethane, pentaerythritol, xylitol, arabitol, mannitol, glucose and sucrose, having a hydroxyl number from 15 to 100 mgKOH/g.

The unsaturated dicarboxylic acid or anhydride in step i) is selected from maleic anhydride, maleic acid, fumaric acid and mixtures thereof. The unsaturated dicarboxylic acid or anhydride reacts with a hydroxyl group in the polyether polyol through an esterification reaction leading to the incorporation of terminal vinyl carboxyl groups into the polyether polyol. The resulting product is then treated with an alkylene oxide. The alkylene oxide reacts with the terminal carboxylic acid groups. It has been also observed that the product thus obtained can react with one or more polyether polyol molecules giving rise to the formation of dimers or trimers. The product obtained after step i) might include all these species and is denoted herein as "unsaturation-containing polyether polyol".

According to an embodiment, the unsaturated dicarboxylic acid or anhydride in step i) is maleic anhydride.

It is particularly suitable that the unsaturation-functionalized polyether polyol obtained after step i) maintains one or more non-functionalized hydroxyl (-OH) groups, on average. Accordingly, the molar ratio of the unsaturated dicarboxylic acid or anhydride to the polyether polyol in step i) is from 0.1:1 to x: 1, wherein x is the hydroxyl functionality of the polyether polyol minus 1 (f-1).

In a particular embodiment, the molar ratio of the unsaturated dicarboxylic acid or anhydride to the polyether polyol in step i) is from 0.2:1 to x:1, or even from 0.3:1 to x:1. In a further embodiment, it is from 0.5:1 to x:1, wherein x is the hydroxyl functionality of the polyether polyol minus 1.

In a particular embodiment, x is the hydroxyl functionality of the polyether polyol minus 1.5. In an embodiment, when the polyether polyol has a functionality of 3-6, x is the hydroxyl functionality of the polyether polyol minus 2.

According to an embodiment, the molar ratio of the unsaturated dicarboxylic acid or anhydride to the polyether polyol in step i) might be from 0.1:1 to 3.0:1, or even from 0.1:1 to 2.0:1 (provided that it is equal or lower than x:1, x being the hydroxyl functionality of the polyether polyol minus 1). In a particular embodiment, said molar ratio is 0.2-2.0:1, or even 0.2-1.8:1 (provided that it is equal or lower than x:1, x being the hydroxyl functionality of the polyether polyol minus 1). According to an embodiment, the molar ratio of the unsaturated dicarboxylic acid or anhydride to the polyether polyol in step i) is from 0.4:1 to 1.5:1, or even from 0.5:1 to 1.0:1 (provided that it is equal or lower than x:1, x being the hydroxyl functionality of the polyether polyol minus 1). In a further embodiment, said molar ratio is from 0.7:1 to 0.9:1.

In a particular embodiment, when the polyether polyol has a functionality of 2, the molar ratio unsaturated dicarboxylic acid or anhydride:polyether polyol is 0.1-1:1. In a further embodiment, it is 0.2-1:1, or even 0.2-0.8:1.

In a particular embodiment, when the polyether polyol has a functionality of 3, the molar ratio unsaturated dicarboxylic acid or anhydride:polyether polyol is 0.1-2:1. In a further embodiment, it is 0.1-1.5:1, or even 0.1-1.3:1. In another embodiment, it is 0.3-1.5:1, or even 0.5-1.5:1.

In a particular embodiment, when the polyether polyol has a functionality of 4, the molar ratio unsaturated dicarboxylic acid or anhydride:polyether polyol is 0.1-3:1. In a further embodiment, it is 0.1-2.5:1, or even 0.1-2:1. In another embodiment, it is 0.3-3:1, or even 0.5-2:1.

In a particular embodiment, when the polyether polyol has a functionality of 5, the molar ratio unsaturated dicarboxylic acid or anhydride:polyether polyol is 0.1-4:1. In a further embodiment, it is 0.1-3:1, or even 0.1-2:1. In another embodiment, it is 0.3-4:1, or even 0.5-3:1.

In a particular embodiment, when the polyether polyol has a functionality of 6, the molar ratio unsaturated dicarboxylic acid or anhydride:polyether polyol is 0.1-5:1. In a further embodiment, it is 0.1-4:1, or even 0.1-3:1. In another embodiment, it is 0.1-2:1. In another embodiment, it is 0.3-5:1, or even 0.5-4:1.

In a particular embodiment, when the polyether polyol has a functionality of 6, the molar ratio unsaturated dicarboxylic acid or anhydride:polyether polyol is 1-5:1. In a further embodiment, it is 1.5-4:1, or even 2-4:1. In another embodiment, it is 1-4:1, or even 1-3:1.

The reaction between the polyether polyol and the dicarboxylic acid or anhydride in step i) may be performed by means known in the prior art. In an embodiment, step i) is performed in the presence of a catalyst, in order to accelerate the esterification reaction.

In an embodiment, the amount of catalyst in step i) is from 1 to 30 mol% with respect to the polyether polyol. In an embodiment, the amount of catalyst in step i) is from 0.05 to 10 wt% with respect to the polyether polyol.

Suitable catalysts include salts and oxides of divalent metals, such zinc acetate, zinc chloride, zinc oxide, zinc neodecanoate, tin chloride, calcium naphthenate, calcium chloride, calcium oxide, calcium acetate, copper naphthenate, cadmium acetate or cadmium chloride; and alkali metal hydroxides, such as sodium hydroxide or potassium hydroxide. In an embodiment, the catalyst is a calcium salt or oxide, for example calcium naphthenate.

The alkylene oxide in step i) might be selected from alkylene oxides having from 2 to 4 carbon atoms (e.g. ethylene oxide, propylene oxide, butylene oxide and mixtures thereof). In an embodiment, the alkylene oxide is selected from ethylene oxide, propylene oxide, and mixtures thereof. In a particular embodiment, it is propylene oxide.

The alkylene oxide might be present in step i) in an excess amount. In an embodiment, the alkylene oxide is present in step i) in an amount from 1 to 15 (100-1500 mol%), or from 1 to 10 (100-1000 mol%), molar equivalents amount with respect to the polyether polyol. In an embodiment, the alkylene oxide is present in step i) in an amount from 1 to 20 wt%, or from 1 to 10wt%, with respect to the weight of the polyether polyol.

In a preferred embodiment, unreacted alkylene oxide is removed after step i), for example under vaccum.

Step i) may be performed at a temperature from 50°C to 200°C, such as 100-160°C. In a further embodiment, it is performed at a temperature between 130°C and 160°C.

Reaction of the polyether polyol with the unsaturated carboxylic acid or anhydride in step i) may be carried out for 0.5 to 3.5 hours, or even for 0.6 to 2.5 hours. Subsequent reaction with an alkylene oxide in step i) may be carried out for 2 to 10 hours, or even for 2 to 6 hours.

The reaction in step i) may be performed in the presence of a solvent or diluent, such as mono-ols (i.e., monohydroxy alcohols), polyols, hydrocarbons, ethers, and mixtures thereof. In a particular embodiment, said reaction is performed without addition of a solvent or diluent.

After step i), an unsaturation-containing polyether polyol is obtained.

In a particular embodiment, the unsaturation-containing polyether polyol contains, on average, from 0.1 to 2.0 moles of unsaturation per mole of unsaturation-containing polyether polyol (provided that said value is equal to or lower than x, wherein x is the hydroxyl functionality of the starting polyether polyol minus 1); that is, the starting polyether polyol is reacted with from 0.1 to 2.0 moles of the unsaturated dicarboxylic acid or anhydride. In an embodiment, it contains, on average, 0.2-1.8, or even 0.4-1.5, moles of unsaturation per mole of unsaturation-containing polyether polyol (provided that said value is equal to or lower than x, wherein x is the hydroxyl functionality of the starting polyether polyol minus 1).

The unsaturation or level of unsaturation, as used herein in relation to the unsaturation-containing polyether polyol, means the average unsaturation and refers to the moles of induced unsaturation (by reaction with an unsaturation containing reagent, such as an unsaturated dicarboxylic acid or anhydride) per mole of said polyether polyol. Therefore, said unsaturation or level of unsaturation corresponds basically to the moles of the unsaturation containing reagent with respect to the moles of polyether polyol. The amount of unsaturation can be also determined by known analytical methods, for example, by $^1$H-NMR.

In some particular embodiments, the unsaturation-containing polyether polyol has an acid number in the range from 0.02 to 5 mgKOH/g. In a further embodiment, it has an acid number from 0.02 to 1 mgKOH/g, or even from 0.05 to 0.8 mgKOH/g.

In accordance with particular embodiments, the unsaturation-containing polyether polyol has a viscosity from 500 to 10.000 mPa s. In further embodiments, it has a viscosity from 1.000 to 8.000 mPa s, or even from 1.500 to 6.000 mPa s.

The unsaturation-containing polyether polyol obtained in step i) is subsequently reacted with an ethylenically unsaturated acid or anhydride monomer (also referred herein as ethylenically unsaturated acid or anhydride) in the presence of a free-radical initiator and optionally in the presence of a diluent and/or of other ethylenically unsaturated monomers different from the ethylenically unsaturated acid or anhydride monomer. Suitable ethylenically unsaturated acids or anhydrides include acrylic acid, methacrylic acid, maleic acid, fumaric acid, crotonic acid, angelic acid, tiglic acid, citraconic acid, 2,3-dimethylmaleic acid, 3-butenoic acid, itaconic acid, maleic anhydride, citraconic anhydride, 2,3-dimethylmaleic anhydride, and mixtures thereof.

In a particular embodiment, the ethylenically unsaturated acid or anhydride is selected from acrylic acid, methacrylic acid and mixtures thereof. In a further embodiment, it is acrylic acid.

In an embodiment, the molar ratio of the ethylenically unsaturated acid or anhydride to the unsaturation of the unsaturation-containing polyether polyol in step ii) is from 4:1 to 50:1. In a particular embodiment, the molar ratio ethylenically unsaturated acid or anhydride:unsaturation of the unsaturation-containing polyether polyol in step ii) is from 6:1 to 40:1 or even from 8:1 to 40:1. In a further embodiment, said molar ratio is from 10:1 to 35:1.

In an embodiment, the molar ratio of the ethylenically unsaturated acid or anhydride in step ii) to the unsaturated dicarboxylic acid or anhydride in step i) is from 4:1 to 50:1. In a particular embodiment, said ratio is 6-40:1 or even 8-40:1. In a further embodiment, it is 10-35:1.

According to an embodiment, the molar ratio of the ethylenically unsaturated acid or anhydride in step ii) to the polyether polyol in step i) is from 3:1 to 40:1. In a particular embodiment, said molar ratio is 4-35:1 or even 6-35:1. In a further embodiment, said molar ratio is 8-25:1.

According to an embodiment, the weight ratio of the ethylenically unsaturated acid or anhydride to the unsaturation-containing polyether polyol in step ii) is from 0.03:1 to 1:1. In a particular embodiment, the weight ratio ethylenically unsaturated acid or anhydride:unsaturation-containing polyether polyol in step ii) is from 0.05:1 to 0.8:1 or even from 0.1:1 to 0.5:1.

In addition to the ethylenically unsaturated acid or anhydride monomer, other ethylenically unsaturated monomers might be present in step ii). These other ethylenically unsaturated monomers will also polymerize, along with the ethylenically unsaturated acid or anhydride, in the presence of the radical initiator.

The other ethylenically unsaturated monomers might be present in step ii) in an amount equal to or lower than 85 wt%, or equal to or lower than 70 wt%, based on the total weight of the ethylenically unsaturated monomers present in step ii) (i.e. the total weight of the ethylenically unsaturated acid or anhydride monomers + the other ethylenically unsaturated monomers). In an embodiment, they might be present in an amount equal to or lower than 50 wt%, or equal to or lower than 40 wt%, based on the total weight of the ethylenically unsaturated monomers present in step ii). Therefore, in a particular embodiment, step ii) comprises 0-85 wt%, or even 0-70 wt%, of other ethylenically unsaturated monomers, based on the total weight of the ethylenically unsaturated monomers present in step ii). In a further embodiment, step ii) comprises 0-50 wt%, or even 0-40 wt%, of other ethylenically unsaturated monomers, based on the total weight of the ethylenically unsaturated monomers present in step ii).

In step ii), the molar ratio of other ethylenically unsaturated monomers to the ethylenically unsaturated acid or anhydride might be equal to or lower than 3:1, or even equal to or lower than 1:1. In an embodiment, the molar ratio of other ethylenically unsaturated monomers to the ethylenically unsaturated acid or anhydride might be equal to or lower than 0.5:1, or even equal to or lower than 0.4:1. In a particular embodiment, step ii) comprises 0-75 mol%, or even 0-50 mol%, of other ethylenically unsaturated monomers, based on the total moles of ethylenically unsaturated monomers present in step ii). In a further embodiment, step ii) comprises 0-40 mol%, or even 0-30 mol%, of other ethylenically unsaturated monomers based on the total moles of the ethylenically unsaturated monomers present in step ii).

In a particular embodiment, the only ethylenically unsaturated monomer present in step ii) is the ethylenically unsaturated acid or anhydride. That is, no other ethylenically unsaturated monomers different from the ethylenically unsaturated acid or anhydride are added.

The term "ethylenically unsaturated" as used herein refers to a monomer containing an ethylenic unsaturation (>C=C<, i.e. two double bonded carbon atoms) that is capable to undergoing free radically induced addition polymerization reactions.

The other ethylenically unsaturated monomers might be selected from styrene, $\alpha$-methylstyrene, butylstyrene, chlorostyrene, cyanostyrene, bromostyrene, methyl acrylate, methyl methacrylate, ethyl acrylate, 2-hydroxypropyl acrylate, 2-hydroxyethyl acrylate, butyl acrylate, isopropyl methacrylate, acrylonitrile, methacrylonitrile, acrylamide, methacrylamide, N,N-dimethyl acrylamide, N-(dimethylaminomethyl)acrylamide, vinyl acetate, and mixtures thereof. In an embodiment, the other ethylenically unsaturated monomer is styrene.

In a particular embodiment, step ii) comprises reacting the unsaturation-containing polyether polyol obtained in step i) with an ethylenically unsaturated monomer in the presence of a radical initiator, wherein 15-100 wt% of the ethylenically unsaturated monomer, or even 30-100 wt% of the ethylenically unsaturated monomer, is an ethylenically unsaturated acid or anhydride. In a particular embodiment, 50-100 wt% of the ethylenically unsaturated monomer, or even 60-100 wt% of the ethylenically unsaturated monomer, is an ethylenically unsaturated acid or anhydride.

In a particular embodiment, step ii) comprises reacting the unsaturation-containing polyether polyol obtained in step i) with an ethylenically unsaturated monomer in the presence of a radical initiator, wherein 15-100 mol% of the ethylenically unsaturated monomer, or even 30-100 mol% of the ethylenically unsaturated monomer, is an ethylenically unsaturated acid or anhydride. In a particular embodiment, 50-100 mol% of the ethylenically unsaturated monomer, or even 60-100 mol% of the ethylenically unsaturated monomer, is an ethylenically unsaturated acid or anhydride.

The molar ratio of the total ethylenically unsaturated monomers (ethylenically unsaturated acid or anhydride + other ethylenically unsaturated monomers, if any) to the unsaturation of the unsaturation-containing polyether polyol in step ii) might be from 5:1 to 60:1. In a particular embodiment, the molar ratio of the total ethylenically unsaturated monomers:unsaturation of the unsaturation-containing polyether polyol in step ii) is from 6:1 to 50:1 or even from 8:1 to 45:1.

In an embodiment, the molar ratio of the total ethylenically unsaturated monomers in step ii) to the unsaturated dicarboxylic acid or anhydride in step i) is from 5:1 to 60:1. In a particular embodiment, said ratio is 6-50:1 or even 8-45:1.

According to an embodiment, the molar ratio of the total ethylenically unsaturated monomers in step ii) to the polyether polyol in step i) is from 4:1 to 50:1. In a particular embodiment, said molar ratio is 4-40:1 or even 6-40:1.

Step ii) might be optionally performed in the presence of a diluent.

In a particular embodiment, step ii) is performed in the presence of a diluent. Suitable diluents include mono-ols (i.e., monohydroxy alcohols), polyols, hydrocarbons, ethers, and mixtures thereof.

Preferably, the diluent in step ii) is a polyol.

Suitable polyols for use as diluents in step ii) include polyols having a hydroxyl functionality from 2 to 8; or even from 2 to 6. In a particular embodiment, the polyol has a molecular weight from 300 Da to 15.000 Da, or from 1.000 to 12.000 Da. In an embodiment, is has a molecular weight from 2.000 to 6.000 Da. In a further embodiment, the polyol has a hydroxyl number in the range from 10 to 400, or from 15 to 150, or even from 15 to 100 mg KOH/g.

In an embodiment, the polyol used as diluent in step ii) is a polyol having a hydroxyl functionality from 2 to 6, a molecular weight from 300 to 15.000 Da, and a hydroxyl number from 15 to 150 mg KOH/g.

In an embodiment, the polyol is selected from a polyether polyol, a polyester polyol and a polycarbonate polyol, that is, a polyol as defined above having ether groups, ester groups or carbonate groups, respectively, within the polymer chain.

In a preferred embodiment, the polyol is a polyether polyol also usually referred to as polyalkylene polyether polyol. In a preferred embodiment, said polyether polyol is the product of polymerization of alkylene oxides having from 2 to 4 carbon atoms (e.g. ethylene oxide, propylene oxide, butylene oxide and mixtures thereof) in the presence of a starting compound having at least one active hydrogen atom, preferably from 2 to 6.

Suitable starting compounds for the obtention of polyether polyol that might be used as diluent in step ii) include, for example, polyhydroxyl compounds such as, ethylene glycol, propylene glycol, diethylene glycol, dipropylene glycol, tripropylene glycol, 1,3-dihydroxypropane, 1,3-dihydroxybutane, 1,4-dihydroxybutane, 1,4-, 1,5-, 1,6-dihydroxyhexane, 1,2-, 1,3-, 1,4-, 1,6-, 1,8-dihydroxyoctane, 1,10-dihydroxydecane, 1,2,4-trihydroxybutane, 1,2,6-trihydroxyhexane, 1,1,1-trimethyl-olethane, 1,1,1-trimethylol propane, glycerol, sorbitol, pentaerythritol, xylitol, arabitol, mannitol, glucose, sucrose and the like; water; ammonia; amino alcohols such as ethanolamine, diethanolamine, triethanolamine; and primary and/or secondary amine or polyamines such as ethylenediamine, aniline and toluene diamine. By alkoxylation of the starter, a suitable polyether polyol can be formed. The alkoxylation reaction may be catalysed using any conventional catalyst including, for example, potassium hydroxide or a double metal cyanide (DMC) catalyst.

In an embodiment, the polyether polyol that might be used as diluent in step ii) is built up of propylene oxide units, ethylene oxide units, or mixtures thereof. That is, it is a poly(ethylene oxide and/or propylene oxide).

In a further embodiment, the polyether polyol that might be used as diluent in step ii) is built up of propylene oxide and ethylene oxide units; that is, it is a propylene oxide-ethylene oxide copolymer. In an embodiment, said polyether polyol is a random or blocked propylene oxide-ethylene oxide copolymer with or without ethylene oxide terminal (cap) groups.

Therefore, the polyether polyol that might be used as diluent in step ii) may be a propylene oxide homopolymer or an ethylene oxide homopolymer or a random or blocked propylene oxide-ethylene oxide copolymer with or without ethylene oxide terminal groups.

In an embodiment, the polyether polyol that might be used as diluent in step ii) is built up of propylene oxide monomers and 0-95 wt%, or even 0-75 wt%, of ethylene oxide monomers based on the weight of the monomers (propylene oxide+ethylene oxide monomers). In an embodiment, said polyether polyol is built up of propylene oxide and 0-50 wt%, or even 0-30 wt%, of ethylene oxide based on the weight of the monomers (propylene oxide+ethylene oxide monomers). In an embodiment, said polyether is a propylene oxide homopolymer.

In an embodiment, the polyether polyol that might be used as diluent in step ii) is built up of ethylene oxide monomers and 0-95 wt%, or even 0-75 wt%, of propylene oxide monomers based on the weight of the monomers (propylene oxide+ethylene oxide monomers). In another embodiment, said polyether polyol is built up of ethylene oxide and 0-50 wt%, or even 0-30 wt%, of propylene oxide based on the weight of the monomers (propylene oxide+ethylene oxide monomers). In an embodiment, said polyether polyol is an ethylene oxide homopolymer.

In another embodiment, the polyether polyol that might be used as diluent in step ii) is built up of propylene oxide and ethylene oxide and comprises 2-98 wt% of propylene oxide monomers and 2-98 wt% of ethylene oxide monomers, based on the weight of the monomers (propylene oxide+ethylene oxide monomers. In an embodiment, the polyether polyol that might be used as diluent in step ii) is built up of propylene oxide and ethylene oxide and comprises 2-50 wt%, or even 5-30 wt% of ethylene oxide based on the weight of the monomers (propylene oxide + ethylene oxide monomers).

The polyether polyol that might be used as diluent in step ii) may have hydroxyl functionality of 2, 3, 4, 5, 6, 7 or 8. In an embodiment, it has a functionality of 3 to 6. In a particular embodiment, it has a functionality of 2 to 5, or even of 2-4. In another embodiment, it has a functionality of 3.

In a particular embodiment, the polyether polyol that might be used as diluent in step ii) is a poly(ethylene oxide and/or propylene oxide) having a hydroxyl functionality from 2 to 6, and a molecular weight from 300 to 15.000 Da.

The polyether polyol that might be used as diluent in step ii) might be the same as or different from the polyether polyol used in step i) to prepare the unsaturation-containing polyether polyol.

When a polyol is used as diluent in step ii), said step is performed in a mixture of polyols (the polyol and the unsaturation-containing polyether polyol). It is preferred that the polyol used as diluent in step ii) has not been subjected to any reaction or treatment to induce unsaturation. In that case, the mixture of polyols used in step ii) will have a level of unsaturation lower than that of the unsaturation-containing polyether polyol.

In a particular embodiment, the unsaturation-containing polyether polyol that is reacted in step ii) contains from 0.05 to 0.9, or even from 0.1 to 0.8 moles of unsaturation per mole of total polyols present in step ii) (i.e. unsaturation-containing polyether polyol + other polyols present in step ii), if any, such as the optional diluent).

In a particular embodiment, step ii) is performed in the presence of a polyol as diluent and the mixture of polyols in step ii) (polyol + unsaturation-containing polyether polyol) has a level of unsaturation less than one mole of unsaturation per mole of total polyols (i.e. the mixture of polyols present in step ii)). In a particular embodiment, the mixture of polyols in step ii) has a level of unsaturation, on average, from 0.05 to 0.9, or even from 0.1 to 0.8 moles of unsaturation per mole of total polyols.

According to an embodiment, the diluent might be present in step ii) in an amount of 0 to 400 wt% with respect to the weight of the unsaturation-containing polyether polyol. In an embodiment, it is present in an amount of 5 to 400 wt% with respect to the weight of the unsaturation-containing polyether polyol. In a further embodiment, the diluent is present in step ii) in an amount of 10 to 300 wt% with respect to the weight of the unsaturation-containing polyether polyol, or even from 10 to 250 wt%.

Step ii) might be optionally performed in the presence of a chain transfer agent.

Chain transfer agents and their nature are known in the art. They are also commonly referred to as polymer control agents or molecular weight regulators since they are employed to control the molecular weight of the copolymerizate. Suitable chain transfer agents include mercaptans (e.g. dodecanethiol, mercaptoacetic acid, mercaptopropionic acid, ethanethiol, 1-heptanethiol, 2-octanethiol and toluenethiol), alkyl halides (carbon tetrachloride, carbon tetrabromide, chloroform, methylene chloride), alcohols (e.g. isopropanol, ethanol, tert-butanol, methanol), toluene, ethylbenzene, trimethylamine, water, cyclohexane, terpenes (terpinolene, gamma terpinene).

In a particular embodiment, the chain transfer agent is present in step ii) in an amount from 0 to 10.0 wt%, or from 0.2 to 5 wt%, based on the weight of the unsaturation-containing polyether polyol.

In a particular embodiment, the molar ratio of chain transfer agent to the unsaturation of the unsaturation-containing polyether polyol in step ii) is 0-3:1. In an embodiment, the molar ratio of chain transfer agent to unsaturation-containing polyether polyol in step ii) is from 0.1:1 to 2:1, or from 0.2:1 to 1.5:1.

In a particular embodiment, the molar ratio of chain transfer agent in step ii) to the unsaturated dicarboxylic acid or anhydride in step i) is 0-3:1. In an embodiment, said molar ratio is from 0.1:1 to 2:1, or from 0.2:1 to 1.5:1.

In a particular embodiment, the molar ratio of chain transfer agent in step ii) to the polyether polyol in step i) is 0-3:1. In an embodiment, said molar ratio is from 0.1:1 to 2:1, or from 0.2:1 to 1.0:1.

Step ii) is performed in the presence of a radical initiator. The term "radical initiator" or "free-radical initiator" refers to a compound that generates a radical when energy (e.g. from light or heat) is imparted to the compound.

Suitable radical initiators for step ii) include conventional free-radical initiators which are known in the art, such as thermal initiators and photoinitiators. Suitable free-radical initiators include thermal initiators such as alkyl and aryl peroxides, alkyl and aryl hydroperoxides, acyl peroxides, peroxyesters, persulfates, perborates, percarbonates and azo compounds. Some specific examples include hydrogen peroxide, dibenzoyl peroxide, didecanoyl peroxide, dilauroyl peroxide, t-butyl hydroperoxide, benzoyl peroxide, di-t-butyl peroxide, di(3,5,5-trimethylhexanoyl)peroxide, diisobutyryl peroxide, t-butylperoxy diethyl acetate, t-butyl peroctoate, t-butyl peroxy isobutyrate, t-butyl peroxy 3,5,5-trimethyl hexanoate, t-butyl perbenzoate, t-butyl peroxy pivalate, t-butyl peroxy-2-ethyl hexanoate, tert-amyl peroxy-2-ethylhexanoate, 1,1,3,3-tetramethylbutyl peroxy-2-ethylhexanoate, cumene hydroperoxide, azobis(isobutyronitrile) and 2,2'-azo bis-(2-methylbutyronitrile). Suitable photoinitiators include benzoin ethers, benzils, α-hydroxyl- or α-alkoxy- or α-aminoalkylphenones, acylphenyl oxides, thioxanthones and benzophenones. Some specific examples include benzoin methyl ether, benzoin ethyl ether, benzoin isopropyl ether, benzoin n-propyl ether, benzoin isobutyl ether, benzoin n-butyl ether, benzoin, benzil, acetophenone, 2,2-diethoxyacetophenone, 4'-hydroxyacetophenone, p-dimethylaminoacetophenone, benzophenone, 2-chlorobenzophenone, 2-benzyl-2-(dimethylamino)-4'-morpholinobutyrophenone, diphenyl(2,4,6-trimethyl-benzoyl)phosphine oxide, thioxanthen-9-one, 2-chlorothioxanthen-9-one, 4-(dimethylamino)benzophenone, and 4,4'-dihydroxybenzophenone.

In an embodiment, initiators include acyl peroxides such as didecanoyl peroxide, lauroyl peroxide, diisobutyryl peroxide and di(3,5,5-trimethylhexanoyl)peroxide, peroxyesters such as tert-amyl peroxy-2-ethylhexanoate, 1,1,3,3-tetramethylbutyl peroxy-2-ethylhexanoate, hydroperoxides such as cumene hydroperoxide, and azo compounds such as azobis(isobutyronitrile) and 2,2'-azo bis-(2-methylbutyronitrile).

In an embodiment, the molar ratio of the radical initiator to the unsaturation of the unsaturation-containing polyether polyol in step ii) is from 0.02:1 to 3:1. In a particular embodiment, said molar ratio is from 0.05:1 to 3:1, or even from 0.08:1 to 2:1.

In an embodiment, the molar ratio of the radical initiator in step ii) to the unsaturated dicarboxylic acid or anhydride in step i) is from 0.02:1 to 3:1. In a particular embodiment, said ratio is 0.05-3:1 or even 0.08-2:1.

According to an embodiment, the molar ratio of the radical initiator in step ii) to the polyether polyol in step i) is from 0.01:1 to 3:1. In a particular embodiment, said molar ratio is 0.05-3:1 or even 0.05-2:1.

In a particular embodiment, the amount of the radical initiator used in step ii) is from 0.01 to 15 wt%, or from 0.1 to 10 wt%, with respect to the weight of the unsaturation-containing polyether polyol.

In an embodiment, the unsaturation-containing polyether polyol is present in step ii) in an amount of 10-95 wt%, or even 10-90 wt%, with respect to the total weight of all the components in step ii). In a particular embodiment, the unsaturation-containing polyether polyol is present in step ii) in an amount of 20-80 wt% based on the total weight of all the components in step ii).

In an embodiment, the diluent might be present in step ii) in an amount of 0-80 wt%, or even 0-75 wt%, with respect to the total weight of all the components in step ii). In a particular embodiment, the diluent might be present in step ii) in an amount of 5-80 wt%, or even 5-75 wt%, based on the total weight of all the components in step ii).

In an embodiment, the ethylenically unsaturated acid or anhydride is present in step ii) in an amount of 2-30 wt%, or even 3-30 wt%, with respect to the total weight of all the components in step ii). In a particular embodiment, the ethylenically unsaturated acid or anhydride is present in step ii) in an amount of 2-20 wt%, or even 3-20 wt%, based on the total weight of all the components in step ii).

In an embodiment, the other ethylenically unsaturated monomer different from the ethylenically unsaturated acid or anhydride is present in step ii) in an amount of 0-30 wt%, or even 0-20 wt%, with respect to the total weight of all the components in step ii). In a particular embodiment, the other ethylenically unsaturated monomer different from the ethylenically unsaturated acid or anhydride is present in step ii) in an amount of 0-15 wt%, or even 0-10 wt%, based on the total weight of all the components in step ii).

In an embodiment, the total ethylenically unsaturated monomers (ethylenically unsaturated acid or anhydride + other ethylenically unsaturated monomers, if any) are present in step ii) in an amount of 2-60 wt%, or even 3-60 wt%, with respect to the total weight of all the components in step ii). In a particular embodiment, the total amount of ethylenically unsaturated monomers in step ii) is of 2-40 wt%, or even 3-25 wt%, based on the total weight of all the components in step ii).

In an embodiment, the radical initiator is present in step ii) in an amount of 0.1-10 wt%, or even 0.1-5 wt%, with respect to the total weight of all the components in step ii).

In an embodiment, the chain transfer agent might be present in step ii) in an amount of 0-10 wt%, or even 0-5 wt%, with respect to the total weight of all the components in step ii). In a particular embodiment, the chain transfer agent is present in step ii) in an amount of 0.05-10 wt%, or even 0.1-5 wt%, based on the total weight of all the components in step ii).

In an embodiment, step ii) comprises reacting 10-95 wt% of unsaturation-containing polyether polyol, 0-80 wt% of diluent, 2-30 wt% of ethylenically unsaturated acid or anhydride, 0.1-10 wt% of radical initiator, 0-30 wt% of other ethylenically unsaturated monomers different from the ethylenically unsaturated acid or anhydride, and 0-10 wt% of a chain transfer agent, with respect to the total weight of all the components in step ii).

According to an embodiment, step ii) comprises reacting 10-90 wt% of unsaturation-containing polyether polyol, 5-80 wt% of diluent, 2-30 wt% of ethylenically unsaturated acid or anhydride, 0.1-5 wt% of radical initiator, 0-15 wt% of other ethylenically unsaturated monomers different from the ethylenically unsaturated acid or anhydride, and 0-5 wt% of a chain transfer agent, with respect to the total weight of all the components in step ii).

In a particular embodiment, step ii) comprises reacting 20-80 wt% of unsaturation-containing polyether polyol, 10-70 wt% of diluent, 2-15 wt% of ethylenically unsaturated acid or anhydride, 0.1-5 wt% of radical initiator, 0-10 wt% of other ethylenically unsaturated monomers different from the ethylenically unsaturated acid or anhydride, and 0-3 wt% of a chain transfer agent, with respect to the total weight of all the components in step ii).

If a thermal radical initiator is used, the temperature at which step ii) takes place should be selected to allow the thermal decomposition of the free-radical initiator leading to free-radicals that enable initiating the polymerization reactions. In a particular embodiment, step ii) is carried out at a temperature from 50°C to 200°C, such as 60-180°C, or even 100-150°C.

Reaction in step ii) may be carried out for 0.5 to 10 hours, or even for 1 to 8 hours.

Step ii) (polymerization reaction) may be carried out in several ways, including batch, semi-batch and continuous processes. In an embodiment, all the components are charged to a reactor and heat is applied in order for the reaction to proceed. Alternatively, the reaction may be carried out by simultaneously adding at a steady or constant rate the ethylenically unsaturated acid or anhydride (and the other ethylenically unsaturated monomers, if any), the radical initiator and the optional chain transfer agent (if any) to the unsaturation-containing polyether and the diluent (if any). Also, a portion of the radical initiator, the ethylenically unsaturated acid or anhydride (and the other ethylenically unsaturated monomers, if any) and optional chain transfer agent may be dispersed in a portion of the unsaturation-containing polyether polyol and/or dispersant (if any), and added to a reaction vessel containing the remaining portion of the reactants, initiator and optional chain transfer agent. In a particular embodiment, a mixture comprising the radical initiator, the ethylenically unsaturated acid or anhydride (and the other ethylenically unsaturated monomers, if any), the optional chain transfer agent (if any), all or a portion of the unsaturation-containing polyether polyol and optionally a portion of the diluent, is added to a reaction vessel containing all or the remaining portion of the diluent and optionally a part of the unsaturation-containing polyether polyol.

After step ii), the polymer of the invention is obtained.

In some particular embodiments, the polymer of the invention has an acid number in the range from 5 to 150 mgKOH/g. In an embodiment, it has an acid number from 20 to 150 mgKOH/g, or even from 20 to 100 mgKOH/g.

In accordance with particular embodiments, the polymer of the invention has a viscosity from 500 to 50.000 mPa s. In further embodiments, it has a viscosity from 1.000 to 30.000 mPa s, or even from 1.000 to 20.000 mPa s.

The polymer of the invention has been found to be useful as dispersant of the polyols obtained by acidolysis of polyurethanes. The term "acidolysis" refers to the treatment of polyurethanes, preferably (waste) polyurethane foams, with a carboxylic acid or carboxylic acid derivative, e.g. anhydride, to convert the polyurethanes into (recycled) polyols by chemical degradation.

The terms "dispersant" and "stabilizer" are used interchangeably herein. These terms generally refer to an agent that is added to a medium to prevent coalescence or settling of the particles contained therein and/or to provide a uniform dispersion.

Therefore, in an aspect, the invention is directed to the use of the polymer of the invention as dispersant in the acidolysis of polyurethanes.

In another aspect, the invention is directed to the use of the polymer of the invention for preparing polyol dispersions by acidolysis of polyurethanes.

In a further aspect, the invention refers to a process for producing polyol dispersions from polyurethane, wherein the process comprises reacting the polyurethane with a dicarboxylic acid or anhydride in the presence of a polymer according to the present invention at a temperature of from 150°C to 250°C (acidolysis process).

In an embodiment, the polyurethane in the acidolysis of the invention is a polyurethane foam.

Preferably the polyurethane or polyurethane material used as raw material in the acidolysis is polyurethane waste, including flexible, semi-rigid and rigid (such as PUR foam and PIR foam) polyurethane waste, such as flexible, semi-rigid and rigid polyurethane waste foams.

A non-limiting exemplary definition for the term polyurethane refers to a polymer containing urethane groups resulting from the reaction of a polyol with an isocyanate. In an embodiment, these polymers might be obtained from formulations having an isocyanate index from 70 to 550. In the context of the invention, the term polyurethane is also intended to include polyisocianurates (PIR). The term polyisocianurates is intended to denote polymers resulting from the reaction of polyols with isocyanates that contain, in addition to urethane functional groups, other types of functional groups, in particular triisocyanuric rings formed by trimerization of isocyanates. Polyisocyanurates are typically obtained from formulations exhibiting an isocyanate index number from 180 to 550. In an embodiment, the polyurethane used in the present invention is a polymer obtained from a formulation having an isocyanate index from 70 to 140, or from 80 to 120. In a further embodiment, it is a polymer obtained from a formulation having an isocyanate index from 90 to 110. The isocyanate index is defined as the ratio of isocyanate-groups over isocyanate-reactive hydrogen atoms present in a polyurethane formulation. Thus, the isocyanate index expresses the percentage of isocyanate actually used in a formulation with respect to the amount of isocyanate theoretically required for reacting with the amount of isocyanate-reactive hydrogen used in a formulation.

Flexible polyurethane foams are polyurethanes which have an open cell structure and a hardness of from 30 to 900 N at 40% loading measured in accordance with EN ISO 2439:2008 (E).

Semi-rigid polyurethane foams are polyurethanes which have an open cell structure but have a compressive strength of at least 100 kPa measured in accordance with EN ISO 844:2009.

Rigid polyurethane foams are polyurethanes which, in the region of the polyurethane, have a closed cell structure and a compressive strength of at least 100 kPa measured in accordance with EN ISO 844:2009. In the context of the present invention, the term rigid polyurethane foam shall also encompass rigid polyisocyanurate foam.

For the purposes of the present invention, polyurethane waste includes waste from the post-consumer, in particular, polyurethane materials which are envisaged for disposal by the end consumer. These materials preferably comprise polyurethane foam, high-resilience polyurethane foam, polyurethane viscoelastic foam and/or other polyurethane foams. Preferred polyurethane waste is waste originating from cushions, upholstery and mattresses.

Optionally, the polyurethane waste can be polyurethane mixed with other polymers and/or fillers, for example those based on polyether or polyester, as well as polyureas and their copolymers are suitable for the acidolysis process according to the invention. The invention is also suitable for polyurethanes that are associated with thermoplastic polymers, such as polyolefins, ABS or PVC. Such thermoplastics can be filtered out from the recycled polyol after the acidolysis reaction.

However, it is preferred to use polyurethane waste that is free of textiles, metal, wood and other foreign materials. It is also preferred that the polyurethane waste is in comminuted form.

In a particular embodiment, the polyurethane waste is sorted to separate the polyurethane from other foreign materials (e.g. other polymers different from polyurethanes) and/or comminuted before the acidolysis.

Suitable dicarboxylic acids or anhydrides for the acidolysis include succinic acid, glutaric acid, maleic acid, malic acid, phthalic acid, adipic acid, succinic anhydride, glutaric anhydride, maleic anhydride, malic anhydride, phthalic anhydride, adipic anhydride and mixtures thereof.

The dicarboxylic acid or anhydride might be used in a total amount of from 3 to 50 wt%, or even from 5 to 40 wt%, based on the total mass of all the starting materials or components in the acidolysis (total mass of the acidolysis reaction). The starting materials or components in the acidolysis of the invention include the polyurethane, the polymer of the invention, the dicarboxylic acid or anhydride and any other optional components present in the reaction mixture.

In an embodiment, the dicarboxylic acid or anhydride is used in the acidolysis in an amount of from 3 to 50 wt%, or even from 5 to 40 wt%, based on the sum of the mass of the polyurethane, the polymer of the invention and the dicarboxylic acid or anhydride.

In an embodiment, the weight ratio of dicarboxylic acid or anhydride to polyurethane in the acidolysis is from 0.05:1 to 1:1, or even from 0.1:1 to 0.5:1.

The polymer of the invention might be used in an amount of from 0.5 to 40 wt%, or even from 1.0 to 40 wt%, based on the total mass of all the starting materials or components in the acidolysis. In an embodiment, the polymer of the invention might be used in an amount of from 1.5 to 40 wt%, or even from 1.5 to 20 wt%, based on the total mass of all the starting materials or components in the acidolysis. In a particular embodiment, the polymer of the invention might be used in an amount of from 2 to 40 wt%, or from 2 to 20 wt%, or even from 2 to 10 wt%, based on the total mass of the starting materials or components in the acidolysis.

In an embodiment, the polymer of the invention is used in the acidolysis in an amount of from 0.5 to 40 wt%, or even from 1.0 to 40 wt%, based on the sum of the mass of the polyurethane, the polymer of the invention and the dicarboxylic acid or anhydride. In a particular embodiment, the polymer of the invention is used in an amount of from 1.5 to 40 wt%, or from 2 to 40 wt%, or even from 2 to 20 wt%, based on the sum of the mass of the polyurethane, the polymer of the invention and the dicarboxylic acid or anhydride.

In an embodiment, the weight ratio of the polymer of the invention to polyurethane in the acidolysis is 0.02-0.25:1, or even 0.2-0.15:1.

The polyurethane might be used in an amount of from 45 to 95 wt%, or even from 50 to 90 wt%, based on the total mass of all the starting materials or components in the acidolysis. The polyurethane might be used in an amount of from 50 to 85 wt%, or even from 50 to 80 wt%, based on the total mass of all the starting materials or components in the acidolysis.

In an embodiment, the polyurethane is used in the acidolysis in an amount of from 45 to 95 wt%, or even from 50 to 90 wt%, based on the sum of the mass of the polyurethane, the polymer of the invention and the dicarboxylic acid or anhydride. In an embodiment, the polyurethane is used in the acidolysis in an amount of from 50 to 85 wt%, or even from 50 to 80 wt%, based on the sum of the mass of the polyurethane, the polymer of the invention and the dicarboxylic acid or anhydride.

Optionally, the acidolysis might be performed in the presence of other additional components, such as a diluent. Suitable diluents include those mentioned herein in relation to the optional diluent in step ii) of the process for preparing the polymer of the invention. In a particular embodiment, said diluent is a polyol selected from those disclosed above in relation to the diluent in step ii) of the process for preparing the polymer of the invention. The optional diluent in the acidolysis might be the same or different from the optional diluent in step ii) of the process for preparing the polymer of the invention.

In a particular embodiment, a diluent might be used in the acidolysis in an amount of 0-20 wt%, or even 0-10 wt%, based on the total mass of all the starting materials or components in the acidolysis.

The polyurethane used in the acidolysis may include other components typically present in polyurethanes, such as fillers, surfactants, flame retardants, catalysts, and/or colorants (pigments or dyes), for example calcium carbonate, styrene-acrylonitrile copolymers, triethylenediamine, N,N- dimethylethanolamine, dibutyltin dilaurate, tin octoate, melamine, polysiloxane-polyoxyalkylene block copolymers, ureas, and/or imides.

The acidolysis might be carried out at a temperature of from 150 to 250°C. According to a particular embodiment, the acidolysis might be performed at a temperature of from 170 to 250°C, or even from 170 to 220°C.

Acidolysis may be carried out for 1 to 24 hours, preferably for 1 to 8 hours, or even for 2 to 6 hours

In some embodiments of the invention, the acidolysis is performed in a reactor or vessel made of stainless steel. In further embodiments, all the apparatus and equipment that come into contact with the starting materials or reactants of the acidolysis (e.g. containers, stirrers, reactors) are made of stainless steel.

The acidolysis according to the present invention can be carried out in a batch, semi-batch or continuous process.

After acidolysis, the polyol dispersion of the invention is obtained.

In accordance with particular embodiments, the polyol dispersion of the invention has a hydroxyl number in the range from 5 to 650 mgKOH/g. In a particular embodiment, when the polyurethane used in the acidolysis is a flexible polyurethane foam, the resulting polyol dispersion has a hydroxyl number in the range from 20 to 50 mgKOH/g.

In some particular embodiments, the polyol dispersion of the invention has an acid number in the range from 5 to 20 mgKOH/g. In an embodiment, it has an acid number from 5 to 15 mgKOH/g.

In accordance with particular embodiments, the polyol dispersion of the invention has a viscosity from 2.000 to 30.000 mPa s. In further embodiments, it has a viscosity from 5.000 to 25.000 mPa s.

In accordance with particular embodiments, the polyol dispersion of the invention has a particle size D50 equal to or lower than 50 $\mu$m. In an embodiment, the polyol dispersion of the invention has a particle size D50 equal to or lower than 20 $\mu$m, or even equal to or lower than 10 $\mu$m. In further embodiments, it has a particle size D50 from 0.5 to 20 $\mu$m, or even 0.5 to 10 $\mu$m. In an embodiment, it has a particle size D50 from 0.5 to 5 $\mu$m, or even 0.7 to 5 $\mu$m.

The polyol dispersion of the invention can be directly used in the manufacture of polyurethanes or it can be reacted or mixed with other components in order to adjust its properties (e.g., hydroxyl number, acid number and/or viscosity) before it is used in the manufacture of polyurethanes.

For example, it can be reacted with a diol or triol as disclosed in WO 2018/091568 A1, in order to increase its OH number and/or reduce its acid number, before being used in the manufacture of polyurethanes.

Alternatively or additionally, it can be mixed with a polyether poyol (different from the polyol dispersion of the invention), e.g. in order to reduce its viscosity, before being used in the manufacture of polyurethanes. Suitable polyether polyols include those disclosed hereinabove in relation to the preparation of the polymer of the invention.

The polyol dispersion obtained after the acidolysis is an isocyanate-reactive polyol dispersion and can therefore be used in the manufacture of polyurethanes.

Accordingly, in another aspect the invention refers to the use of the polyol dispersion of the invention for producing polyurethanes.

In a further aspect, the invention is directed to a process for preparing polyurethanes which comprises reacting the polyol dispersion of the invention with a polyisocyanate. In another aspect, the invention is directed to the polyurethanes obtainable by said process (denoted herein as final polyurethanes).

According to an embodiment, the final polyurethane is a polyurethane foam, including flexible, semi-rigid and rigid polyurethane foams.

Conventional additives for the preparation of polyurethanes, amounts thereof and reaction conditions will vary depending on the type and desired properties of the polyurethane to be prepared. The skilled person knows different reagents, additives and conditions necessary to prepare the polyurethane.

The process for preparing polyurethanes comprises reacting the polyol dispersion of the invention with a polyisocyanate, optionally in the presence of further additives for the preparation of polyurethanes, such as additional polyols, chain transfer agents, catalysts, stabilizers, blowing agents, flame retardants, fillers and/or pigments. Suitable methods for the preparation of polyurethanes are well known in the art.

Suitable polyisocyanates include aromatic, aliphatic, cycloaliphatic polyisocyanates and combinations thereof. Representative of these types are diisocyanates such as m-phenylene diisocyanate, toluene-2,4- and 2,6-diisocyanates, mixtures of 2,4- and 2,6-hexamethylene-1,6-diisocyanate, tetramethylene-1,4-diisocyanate, cyclo-hexane-1,4-diisocyanate, hexahydrotolylene diisocyanate (and isomers), naphthylene-1,5-diisocyanate, 1-methoxy-phenyl-2,4-diisocyanate, diphenylmethane-4,4'-, 2,4' and 2,2'-diisocyanates, 4,4'-biphenylene diisocyanate, 3,3'-dimethoxy-4,4'-biphenyl diisocyanate, 3,3'-dimethyl-4,4'-biphenyl diisocyanate, and 3,3'-dimethyldiphenylmethane-4,4'-diisocyanate; triisocyanates such as 4,4',4'-triphenylmethane triisocyanate, polymethylene polyphenylisocyanate and tolylene 2,4,6-triisocyanate; and tetraisocyanates such as 4,4'-dimethyldiphenylmethane-2,2',5,5'-tetraisocyanate, and mixtures thereof. Especially useful are 4,4'-, 2,4' and 2,2'-isomers of diphenylmethane diisocyante (MDI), toluene-2,4- and 2,6-diisocyanates (TDI), and mixtures thereof.

In an embodiment, the polyisocyanate is used in the preparation of polyurethane at an isocyanate index of from 60 to 140, or from 80 to 120, or even from 90 to 110.

Suitable blowing agents are known in the art, such as the carbon dioxide generated by the decarboxylation of the carbamic acid generated by the reaction of water with the isocyanate, liquid carbon dioxide, methylene chloride, HCFC or pentane.

Suitable catalysts include aminic compounds, such as triethylenediamine, N-methylmorpholine, N,N-dimethylcyclohexylamine, pentamethyldiethylenetriamine, tetramethylethylenediamine, bis(dimethylaminoethyl)ether, 1-methyl-4-dimethylaminoethyl-piperazine, 3-methoxy-N- dimethylpropylamine, N-ethylmorpholine, dimethylethanolamine, N-cocomorpholine, N,N-dimethyl-N',N'-dimethyl isopropylpropylenediamine, N,N-diethyl-3-diethylaminopropylamine and dimethylbenzylamine; and metal catalyst based on tin, zinc or bismuth such as tin octoate, tin dibutyldilaurate or zinc octoate.

Additional additives that may be employed in preparing the polyurethane include fillers (e.g., talc, silica, titania, magnesia, calcium carbonate, carbon black, graphite, magnesium silicate or clays such as kaolinite and montmorillinite); flame retardants (e.g., halogenated flame retardants, such as hexabromocyclododecane and brominated polymers,or phosphorus flame retardants such as triphenylphosphate, dimethyl methylphosphonate, red phosphorus or aluminium diethyl phosphinate); acid scavengers (e.g., calcium stearate, magnesium oxide, zinc oxide, tetrasodium pyrophosphate or hydrotalcite); antioxidants (e.g., sterically hindered phenols, phosphites and mixtures thereof); surfactans (e.g. silicon surfactants) and pigments.

Unless otherwise specified, the term "molecular weight" as used herein refers to the number average molecular weight. The number average molecular weight is determined by gel permeation chromatography. Preferably, molecular weight means the number average molecular weight as measured by gel permeation chromatography using polyethylene glycol as standard.

Viscosities disclosed therein are determined at 25°C. The viscosity is determined according to EN ISO 3219 at 25°C and 25 s-1. Viscosity measurements (in mPa.s) can be obtained employing a Haake iQ viscotester rheometer using the spindle CC25DIN/Ti.

By the term "hydroxyl functionality" or "functionality" it should be understood the average number of hydroxyl groups per molecule of polyol, which is theoretically equal to the number of hydroxyl groups of the initiator molecule used in the polyol synthesis. As used herein, term "hydroxyl functionality" or "functionality" in relation to the polyol refers to the functionality of the initiator used for its preparation.

As used herein, the hydroxyl number is defined as the number of milligrams of potassium hydroxide required for the complete hydrolysis of the fully phthalylated derivative prepared from 1 gram of polyol. The hydroxyl number can be determined according to ASTM -E1899.

The hydroxyl number can also be defined by the equation:

$$OH = (56.1 \times 1000 \times f)/mol.\ wt.$$

wherein:

OH: represents the hydroxyl number of the polyol,
f: represents the functionality of the polyol, and
mol. wt. represents the molecular weight of the polyol.

The acid number (or acidity) is defined as the number of milligrams of potassium hydroxide required for the complete neutralization of the sample and can be determined in accordance with ASTM D4662. It can be measured by titration of the polyol with KOH in a mixture of isopropyl alcohol and water (62.5/37.5 wt/wt).

The particle size D50 (or Dx(50)) means the median diameter (50% volume of the particles present a particle size within the specified value of D50). It can be determined by laser diffraction; for example, using a Mastersizer 3000 spectometer dispersing the sample in ethanol and calculating the particle size distribution using Fraunhofer theory. The invention is illustrated by means of the following examples, which in no case limit the scope of the invention.

## EXAMPLES

Methods

Hydroxyl number, acid number, molecular weight, viscosity and particle size D50 values disclosed in the following examples were determined according to the standards or methods mentioned above.

Materials

Polyol A: A glycerol (functionality 3) initiated polyether polyol (PO/EO) with a molecular weight of 4.800 Da, a hydroxyl number of 35 mg KOH/g, and a content of polyethylene oxide terminal blocks of 18 wt%, based on the total weight of the ethylene oxide and propylene oxide monomers (i.e. OE/(OE+OP), without considering the weight of the starter), and a viscosity at 25 °C of 870 mPa s

Polyol B: A glycerol (functionality 3) initiated polyether polyol (PO/EO) with a molecular weight of 3.500 Da, hydroxyl number of 48 mg KOH/g, a content of polyethylene units, randomly distributed along the central backbone of the polyol, of 12 wt %, based on the total weight of the ethylene oxide and propylene oxide monomers, and a viscosity at 25 °C of 560 mPa s.

Calcium naphthenate (4% Ca): Calcium naphthenate in mineral spirits purchased from Nusa Ibérica.

Maleic anhydride (99 %) was purchased from Sigma Aldrich.

Styrene (99.9 %) was purchased from Sigma Aldrich.

Acrylic acid (98 %) was purchased form Acros Organics.

Terpinolene (> 95 %) was purchased from Quimidroga.

Cumyl Hidroperoxide (80 %) (CHP) was purchased from Acros Organics. Peroxan APO was purchased form Pergan GMBH.

Tegoamin®BDE and Tegoamin®33 are amine catalysts purchased from Evonik.

Kosmos®29 is a stannous octoate-based metal catalyst purchased from Evonik.

Tegostab®B 8255 is a silicone based surfactant purchased from Evonik.

TDI T80/20 is a mixture of the two isomeric forms 2,4-toluene diisocyanate and 2,6-toluene diisocyanate in a ratio 80:20, purchased from Covestro (Desmodur® T80).

Example 1. Synthesis of unsaturated polyol

1000g of polyol A were loaded in a 2L reactor equipped with stirring, jacket, condenser coil, connection to a vacuum pump and tank to supply propylene oxide. The temperature was raised to 125 °C under vacuum and kept at this temperature until the water content (measured by KarlFischer) is below 0.04%. Then the temperature was reduced at 70 °C and 10.0 g of calcium naphthenate (4% Ca) and 16.3 g of maleic anhydride were added. Afterward, the reactor was purged three times with nitrogen (2 kg/cm$^2$, each time) leaving a 1.2 kg/cm$^2$ of nitrogen pressure. Next, the system was heated to 145°C and maintained at this temperature for 1 hour. Then, vacuum was applied and maintained at 145°C and 61.96 g of propylene oxide was loaded into the reactor.

The reaction was left at 145 °C for 4 hours and then, whilst lowering the temperature to 110°C, vacuum was applied for 1 hour to remove the propylene oxide. It was finally cooled to 50°C and the unsaturated polyester polyols produced was collected. The product had a viscosity of 3778 mPA s and an acidity of 0.083 mgKOH/g. Thereinafter the polyol produced in this example will be called unsaturated polyol.

Examples 2-11: General process for the polymerization (grafting) reaction

A 2L reactor equipped with stirring, jacket, condenser coil was loaded with the unsaturated polyol and was diluted with polyol B. The reactor was purged three times with nitrogen (2 kg/cm$^2$, each time) leaving a 1.2 kg/cm$^2$ of nitrogen pressure and the temperature was raised to 125-140 °C.

A mixture of compounds was prepared in a feed tank, containing unsaturated polyol, polyol B, Terpinolene, radical initiator, acrylic acid and styrene.

The mixture of components was fed into the reactor within 54-285 min. During the feeding of the mixture the temperature was kept at 125-140 °C. Once all the product was introduced in the reactor, the temperature was maintained for 30 min. Then the reactor was cooled down to 90 °C and the product was discharged.

The particulars of each example and the properties of the resulting products are shown in the following table.

| Example | 2 | 3 | 4 | 5 | 6 | 7 | 8 | 9 | 10 | 11 |
|---|---|---|---|---|---|---|---|---|---|---|
| Initial reactor loading | | | | | | | | | | |
| Polyol B (g) | 450.0 | 450.0 | 450.0 | 450.0 | 256.0 | 600.0 | 168.0 | 66.8 | 402.4 | 402.4 |
| Unsat. polyol (g) | 150.0 | 150.0 | 150.0 | 150.0 | 120.0 | 0.0 | 210.0 | 305.2 | 0.0 | 0.0 |

(continued)

| Feed tank | | | | | | | | | | |
|---|---|---|---|---|---|---|---|---|---|---|
| Polyol B (g) | 130.0 | 110.0 | 124.0 | 190.0 | 383.9 | 40.0 | 234.4 | 87.5 | 0.0 | 0.0 |
| Unsat. polyol (g) | 150.0 | 150.0 | 150.0 | 150.0 | 180.0 | 300.0 | 293.0 | 399.7 | 503.0 | 502.3 |
| Styrene (g) | 10.0 | 30.0 | 0.0 | 0.0 | 0.0 | 0.0 | 0.0 | 0.0 | 0.0 | 0.0 |
| Acrylic acid (g) | 100.0 | 100.0 | 100.0 | 50.0 | 50.0 | 50.0 | 84.1 | 117.0 | 84.0 | 84.1 |
| Acrylic acid to Polyol A in step i) (mol//mol ratio) | 22.2 | 22.2 | 22.2 | 11.1 | 11.1 | 11.1 | 11.1 | 11.1 | 11.1 | 11.1 |
| Acrylic acid to maleic anhydride in step i) (mol//mol ratio) | 28.5 | 28.5 | 28.5 | 14.3 | 14.3 | 14.3 | 14.3 | 14.2 | 14.3 | 14.3 |
| Terpinolene (9) | 6.0 | 6.0 | 6.0 | 6.0 | 6.0 | 6.0 | 6.0 | 20.0 | 6.0 | 6.0 |
| Initiator (type) | Peroxan APO | | | | | | | | | CHP |
| Initiator (g) | 4.0 | 4.0 | 20.0 | 4.0 | 4.0 | 4.0 | 4.0 | 4.0 | 4.0 | 3.8 |
| Time of addition (min) | 54 | 44 | 125 | 82 | 117 | 140 | 150 | 160 | 340 | 285 |
| Temperature (° C) | 125 | | | | | | | | | 140 |
| Viscosity (MPa s) | 6449 | 13777 | 8357 | 1989 | 1823 | 1574 | 9368 | 18450 | 8550 | 6458 |
| Acidity (mgKOH/g) | 71.4 | 66.1 | 71.6 | 36.3 | 36.9 | 35.9 | 57.1 | 81.8 | 56.8 | 50.0 |

Examples 12-22: General process for the acidolysis of polyurethane foam

Polyurethane foam acidolysis was performed following the procedure described in DE 19512778 C1. Basically, an electrically heated and temperature-controlled three-necked glass reactor equipped with a stirrer was used for the process. Initially the dispersant was introduced in the reactor. Then the temperature was raised to 200°C, and water blown toluene diisocyanate (TDI) flexible polyurethane foam waste and the dicarboxylic acid were added over the dispersant. The mixture was stirred for 2-6 hours at 200°C and then cooled while stirring.

The particulars of each example and the properties of the resulting products are shown in the following table. The indicated wt% are based on the total mass of the components added into the reactor.

| Example | 12 | 13 | 14 | 15 | 16 | 17 | 18 | 19 | 20 | 21 | 22 |
|---|---|---|---|---|---|---|---|---|---|---|---|
| Dispersant type (example) | 2 | 3 | 4 | 5 | 6 | 7 | 8 | 8 | 9 | 10 | 11 |
| dispersant (wt %) | 8.62 | 8.62 | 8.62 | 8.62 | 8.62 | 8.62 | 5.17 | 2.17 | 2.17 | 5.17 | 5.17 |
| Acid number (mgKOH/g) | 7.1 | 12.50 | 10.40 | 10.00 | 11.20 | 11.30 | 8.70 | 7.30 | 7.80 | 7.17 | 7.95 |
| Viscosity 25°C (mPa·s) | 14750 | 10750 | 19177 | 12890 | 11073 | 11827 | 15160 | 16690 | 16080 | 17700 | 16576 |
| Particle size D50 (μm) | 0.87 | 0.86 | 0.92 | 1.10 | 1.03 | 1.12 | 1.04 | 3.63 | 1.86 | 0.95 | 0.99 |

All the resulting recycled polyols had finely dispersed particles and were stable against sedimentation at room temperature for at least 1 month. No gels were found in the recycled polyol.

Comparative examples 1-4 (use of grafted non-unsaturated polyol as dispersant)

In comparative examples 1-4 a polyol according to DE 19512778 C1 and WO 2018/091568 A1 was used as dispersant in the acidolysis of polyurethane foam. That is a polyether polyol that was directly reacted with an ethylenically unsaturated monomer in the presence of a radical initiator, without the prior reaction of the polyether polyol with an unsaturated dicarboxylic acid or anhydride.

These dispersants, obtained by grafting acrylic acid directly onto the polyether polyol (Polyol A), were used in the acidolysis reaction under the same conditions as in examples 12-22 above according to the invention.

The particulars of each example are shown in the following table. The indicated wt% are based on the total mass of the components added into the reactor.

| Comparative Example | | 1 | 2 | 3 | 4 |
|---|---|---|---|---|---|
| Grafting | Polyol (type) | Polyol A | Polyol A | Polyol A | Polyol A |
| | Acrylic acid:polyol (mol/mol ratio) | 11.1:1 | 11.1:1 | 6.5:1 | 6.5:1 |
| Acidolysis | dispersant (wt %) | 30 | 8.62 | 30 | 2.16 |

In comparative examples 1 and 3, the dispersant was used in an amount similar to that disclosed for this same type of dispersants in DE 19512778 C1 and WO 2018/091568 A1, i.e. about 30 wt%. In comparative example 2 and 4, the dispersant was used in an amount similar to that used in the examples according to the invention above.

The properties of the resulting recycled polyols were as follows:

- Comparative example 1: the viscosity of the recycled polyol was very high and could not be even measured, which makes it unsuitable for its direct use in the manufacture of polyurethanes. Further, the recycled polyol also contained gels, which make it unsuitable for the manufacture of polyurethanes.
- Comparative example 2: the recycled polyol contained gels, which make it unsuitable for the manufacture of polyurethanes.
- Comparative example 3: the recycled polyol had a very high viscosity (81430 mPa s), which makes it unsuitable for its direct use in the manufacture of polyurethanes.
- Comparative example 4: the recycled polyol had a big particle size D50 (23.9 μm), which denotes that the polyol dispersion is not stable. Indeed, solid particles precipitated in less than 5 days.

This comparative examples prove that grafted polyols non previously functionalized with unsaturation, as those disclosed in DE 19512778 C1 and WO 2018/091568 A1, are less efficient as dispersants in the acidolysis of polyurethanes and cannot be used in an amount as low as those according to the present invention. Further, when used in higher amounts, they provide polyol dispersions with a very high viscosity, which might prevent their (direct) use in the industrial production of polyurethanes.

Examples 23-24 and Comparative Examples 5-8: General process for the preparation of polyurethane foams

Recycled polyols of the present invention (Ex. 12 and 15) and recycled polyols of the present invention (comparative Ex. 1-4) were used as starting material for the preparation of polyurethane foams. The reagents used for the preparation of the foams and their amounts expressed in parts per hundred parts of polyol (pphp) are detailed in the table below.

The following process was followed to prepare the polyurethane foams. The polyols, water, amine catalysts (Tegoamin®BDE and Tegoamin® 33), stannous octoate catalyst (Kosmos®29) and silicone surfactant (Tegostab® B8255) were added in relation to 500 g of polyol in a 1 liter container. The contents were mixed at 2.000 rpm for 60 seconds with an agitator. The mixture thus obtained was then degassed for 10 seconds. While the mixer was still rotating, the amount needed of toluene diisocyanate was added to the container and the content was mixed at 2.000 rpm for 10 seconds. The mixture was then poured into a 25x25 cm square box test, where the foam rose until the reaction was complete. The foam was then heated in an oven at 150°C for 30 minutes. Subsequently, the foam was allowed to cure for 24 hours at room temperature before proceeding to its evaluation.

|  | Target | Ex. 23 | Ex. 24 | Comp. Ex. 5 | Comp. Ex. 6 | Comp. Ex. 7 | Comp. Ex. 8 |
|---|---|---|---|---|---|---|---|
| Polyol B (pphp) | 100 | 94 | 94 | 94 | 94 | 94 | 94 |
| Polyol Ex. 12 (pphp) | 0 | 6 | 0 | 0 | 0 | 0 | 0 |
| Polyol Ex. 15 (pphp) | 0 | 0 | 6 | 0 | 0 | 0 | 0 |
| Polyol Comp. Ex. 1 (pphp) | 0 | 0 | 0 | 6 | 0 | 0 | 0 |
| Polyol Comp. Ex. 2 (pphp) | 0 | 0 | 0 | 0 | 6 | 0 | 0 |
| Polyol Comp. Ex. 3 (pphp) | 0 | 0 | 0 | 0 | 0 | 6 | 0 |
| Polyol Comp. Ex. 4 (pphp) | 0 | 0 | 0 | 0 | 0 | 0 | 6 |
| water (pphp) | 4 | 4 | 4 | 4 | 4 | 4 | 4 |
| Tegoamin® BDE (pphp) | 0.1 | 0.1 | 0.1 | 0.1 | 0.1 | 0.1 | 0.1 |
| Tegoamin® 33 (pphp) | 0.12 | 0.12 | 0.12 | 0.12 | 0.12 | 0.12 | 0.12 |
| Kosmos® 29 (pphp) | 0.23 | 0.21 | 0.21 | 0.21 | 0.21 | 0.21 | 0.21 |
| Tegostab®B 8255 (pphp) | 1.25 | 1.25 | 1.25 | 1.25 | 1.25 | 1.25 | 1.25 |
| TDI 80/20 (pphp) | 49.4 | 48.4 | 48.4 | 48.4 | 48.4 | 48.4 | 48.4 |
| Density (Kg/m$^3$) according to ASTM D3574 [1] | 23.1 | 22.5 | 22.6 | 22.7 | 24.3 | 45.7 | 22.6 |
| Compression stress 40% (KPa) according to ISO3386 [2] | 2.72 | 2.76 | 2.79 | 3.49 | 4.05 | - | 3.59 |
| Resilience (%) according to ISO8307 [3] | 41 | 40 | 41 | 24 | 30 | - | 24 |
| Compression set 75% (%) according to ISO1856 [4] | 5.2 | 6.2 | 6.1 | 16.9 | 22.1 | - | 13.3 |
| Porosity (mm/s) according to ISO9237 [5] | 1.355 | 944 | 833 | 83 | 7 | - | 98 |
| Visual aspect | good | good | good | medium shrinkage | hard shrinkage | hard shrinkage | medium shrinkage |

[1] 10% tolerance for density value can be accepted.

[2] Compression stress is a measure of the load-bearing properties of the foam and defines the application in which the foam can be used. In seating or beading applications, the first determining parameter for optimal comfort is foam hardness. If the foam is too hard (i.e. higher compression stress), it may restrict flow in the capillary blood vessels under the skin and induce discomfort.

[3] Highly resilience foams (i.e. higher resilience values) are targeted at high quality furniture and bedding applications, which need improved durability and comfort characteristics.

[4] Higher compression set values compared to the target indicate worse recovery of the foam with use.

[5] Higher porosity values mean better breathability, which is more desired in flexible polyurethane foams.

As shown in the table above, the flexible polyurethane foams obtained by substituting 6 parts of Polyol B with the polyols from comparative examples 1-4 (see polyurethane foams in comparative examples 5-8) have worse porosity, compression set75% values, resilience and compression stress values than those obtained by substituting 6 parts of Polyol B with the polyols of the present invention (see polyurethane foams in examples 23-24). The recycled polyols of the invention provide polyurethane foams with very good properties, comparable to the target values with only Polyol B as polyol source.

**Claims**

1. Use of a polymer obtainable by a process comprising:

    i) reacting a polyether polyol having a hydroxyl functionality of 2-6 and a number average molecular weight of 300-15.000 Da, with an unsaturated dicarboxylic acid or anhydride selected from maleic anhydride, maleic acid, fumaric acid and mixtures thereof, in a molar ratio of the unsaturated dicarboxylic acid or anhydride to the polyether polyol from 0.1:1 to x:1, wherein x is the hydroxyl functionality of the polyether polyol minus 1, followed by reaction with an alkylene oxide, to provide an unsaturation-containing polyether polyol; and
    ii) reacting the resulting unsaturation-containing polyether polyol with an ethylenically unsaturated acid or anhydride monomer in the presence of a radical initiator;

    as dispersant in the acidolysis of polyurethanes.

2. Use according to claim 1, wherein the polyether polyol is built up of propylene oxide units, ethylene oxide units, or mixtures thereof.

3. Use according to any one of claims 1 to 2, wherein the hydroxyl functionality of the polyether polyol is 3-6, preferably 3.

4. Use according to any one of claims 1 to 3, wherein the molar ratio of the dicarboxylic acid or anhydride to the polyether polyol in step i) is from 0.2:1 to 1.8:1, preferably from 0.4:1 to 1.5:1, provided that it is equal or lower than x:1, x being the hydroxyl functionality of the polyether polyol minus 1.

5. Use according to any one of claims 1 to 4, wherein the molar ratio of the ethylenically unsaturated acid or anhydride monomer in step ii) to the unsaturated dicarboxylic acid or anhydride in step i) is from 4:1 to 50:1; preferably from 6:1 to 40:1.

6. Use according to any one of claims 1 to 5, wherein the ethylenically unsaturated acid or anhydride monomer is selected from acrylic acid, methacrylic acid, maleic acid, fumaric acid, crotonic acid, angelic acid, tiglic acid, citraconic acid, 2,3-dimethylmaleic acid, 3-butenoic acid, itaconic acid, maleic anhydride, citraconic anhydride, 2,3-dimethylmaleic anhydride, and mixtures thereof; preferably it is acrylic acid.

7. Use according to any one of claims 1 to 6, wherein step ii) is performed in the presence of an additional ethylenically unsaturated monomer different from the ethylenically unsaturated acid or anhydride monomer; preferably in the presence of styrene.

8. Use according to any one of claims 1 to 7, wherein step ii) is performed in the presence of a diluent, preferably a polyol, more preferably a polyether polyol.

9. Process for producing polyol dispersions from polyurethane, wherein the process comprises reacting the polyurethane with a dicarboxylic acid or anhydride in the presence of a polymer as defined in any one of claims 1 to 8 at a temperature of from 150°C to 250°C.

10. Process according to claim 9, wherein the polymer is present in an amount of from 1.5 to 40 wt%, based on the total mass of the reaction; preferably from 1.5 to 20 wt%.

11. Process according to any one of claims 9 to 10, wherein the weight ratio of dicarboxylic acid or anhydride to polyurethane is from 0.05:1 to 1:1; preferably from 0.1:1 to 0.5:1.

12. Process according to any one of claims 9 to 11, wherein the dicarboxylic acid or anhydride is selected from succinic acid, glutaric acid, maleic acid, malic acid, phthalic acid, adipic acid, succinic anhydride, glutaric anhydride, maleic anhydride, malic anhydride, phthalic anhydride, adipic anhydride and mixtures thereof.

13. Polyol dispersion obtainable by a process as claimed in any one of claims 9 to 12.

14. Use of the polyol dispersion according to claim 13, for producing polyurethane, preferably a polyurethane foam.

15. Polyurethane obtainable by a process comprising reacting the polyol dispersion according to claim 13 with a polyisocyanate.

**Patentansprüche**

1. Verwendung eines Polymers, erhältlich durch ein Verfahren, umfassend:

   i) Umsetzen eines Polyetherpolyols mit einer Hydroxylfunktionalität von 2 - 6 und einem Zahlenmittel-Molekulargewicht von 300 - 15000 Da, mit einer ungesättigten Dicarbonsäure oder Anhydrid, ausgewählt aus Maleinsäureanhydrid, Maleinsäure, Fumarsäure und Mischungen davon, in einem molaren Verhältnis der ungesättigten Dicarbonsäure oder des Anhydrids zu dem Polyetherpolyol von 0,1:1 bis x:1, wobei x die Hydroxylfunktionalität des Polyetherpolyols minus 1 ist, gefolgt von einer Reaktion mit einem Alkylenoxid, um ein Ungesättigtheitenhaltendes Polyetherpolyol bereitzustellen; und
   ii) Umsetzen des resultierenden Ungesättigtheit-enhaltenden Polyetherpolyols mit einem ethylenisch ungesättigten Säure- oder Anhydrid-Monomer in der Anwesenheit eines Radikalinitiators;

   als Dispergiermittel bei der Acidolyse von Polyurethanen.

2. Verwendung nach Anspruch 1, wobei das Polyetherpolyol aus Proplyenoxid-Einheiten, Ethylenoxid-Einheiten oder Mischungen davon aufgebaut ist.

3. Verwendung nach einem der Ansprüche 1 - 2, wobei die Hydroxylfunktionalität des Polyetherpolyols 3 - 6, bevorzugt 3, ist.

4. Verwendung nach einem der Ansprüche 1 - 3, wobei das molare Verhältnis der Dicarbonsäure oder des Anhydrids zu dem Polyetherpolyol in Schritt i) von 0,2:1 bis 1,8:1, bevorzugt von 0,4:1 bis 1,5:1, ist, vorausgesetzt, dass es gleich oder weniger als x:1 ist, wobei x die Hydroxylfunktionalität des Polyetherpolyols minus 1 ist.

5. Verwendung nach einem der Ansprüche 1 - 4, wobei das molare Verhältnis des ethylenisch ungesättigten Säure- oder Anhydrid-Monomers in Schritt ii) zu der ungesättigten Dicarbonsäure oder dem Anhydrid in Schritt i) von 4:1 bis 50:1 ist, bevorzugt von 6:1 bis 40:1.

6. Verwendung nach einem der Ansprüche 1 - 5, wobei das ethylenisch ungesättigte Säure- oder Anhydrid-Monomer ausgewählt ist aus Acrylsäure, Methacrylsäure, Maleinsäure, Fumarsäure, Crotonsäure, Angelicasäure, Tiglinsäure, Citraconsäure, 2,3-Dimethylmaleinsäure, 3-Butensäure, Itaconsäure, Maleinsäureanhydrid, Citraconsäureanhydrid, 2,3-Dimethylmaleinsäureanhydrid, und Mischungen davon, wobei es bevorzugt Acrylsäure ist.

7. Verwendung nach einem der Ansprüche 1 - 6, wobei Schritt ii) in der Anwesenheit eines zusätzlichen ethylenisch ungesättigten Monomers, welches von dem ethylenisch ungesättigten Säure- oder Anhydrid-Monomer unterschiedlich ist, bevorzugt in Anwesenheit von Styrol, durchgeführt wird.

8. Verwendung nach einem der Ansprüche 1 - 7, wobei Schritt ii) in der Anwesenheit eines Verdünnungsmittels durchgeführt wird, bevorzugt eines Polyols, bevorzugter eines Polyetherpolyols.

9. Verfahren zum Herstellen von Polyol-Dispersionen von Polyurethan, wobei das Verfahren das Umsetzen des Polyurethans mit einer Dicarbonsäure oder Anhydrid in der Anwesenheit eines Polymers, wie in einem der Ansprüche 1 - 8 definiert, bei einer Temperatur von 150°C - 250°C umfasst.

10. Verfahren nach Anspruch 9, wobei das Polymer in einer Menge von 1,5 - 40 Gew.%, basierend auf der Gesamtmasse der Reaktion, bevorzugt von 1,5 - 20 Gew.%, vorliegt.

11. Verfahren nach einem der Ansprüche 9 - 10, wobei das Gewichtsverhältnis der Dicarbonsäure oder Anhydrid zu Polyurethan von 0,05:1 bis 1:1 ist, bevorzugt von 0,1:1 bis 0,5:1.

12. Verfahren nach einem der Ansprüche 9 - 11, wobei die Dicarbonsäure oder Anhydrid ausgewählt ist aus Bernsteinsäure, Glutarsäure, Maleinsäure, Äpfelsäure, Phthalsäure, Adipinsäure, Bernsteinsäureanhydrid, Glutarsäureanhydrid, Maleinsäureanhydrid, Äpfelsäureanhydrid, Phthalsäureanhydrid, Adipinsäureanhydrid, und Mischungen davon.

**13.** Polyol-Dispersion, erhältlich durch ein Verfahren, wie in einem der Ansprüche 9 - 12 beansprucht.

**14.** Verwendung der Polyol-Dispersion nach Anspruch 13, zum Produzieren eines Polyurethans, bevorzugt eines Polyurethanschaums.

**15.** Polyurethan, erhältlich durch ein Verfahren, umfassend das Umsetzen der Polyol-Dispersion nach Anspruch 13 mit einem Polyisocyanat.

## Revendications

**1.** Utilisation d'un polymère pouvant être obtenu par un procédé comportant de :

i) faire réagir un polyol de polyéther possédant une fonctionnalité hydroxyle de 2-6 et une masse moléculaire moyenne en nombre de 300 à 15 000 Da, avec un anhydride ou un acide dicarboxylique insaturé choisi parmi l'anhydride maléique, l'acide maléique, l'acide fumarique et des mélanges de ceux-ci, dans un rapport molaire de l'anhydride ou de l'acide dicarboxylique insaturé sur le polyol de polyéther de 0,1:1 à x:1, x étant la fonctionnalité hydroxyle du polyol de polyéther moins 1, suivie d'une réaction avec un oxyde d'alkylène, pour fournir un polyol de polyéther contenant une insaturation, et
ii) faire réagir le polyol de polyéther contenant une insaturation résultant avec un monomère d'anhydride ou d'acide éthyléniquement insaturé en présence d'un initiateur de radicaux,

en tant que dispersant dans l'acidolyse de polyuréthanes.

**2.** Utilisation selon la revendication 1, dans laquelle le polyol de polyéther est constitué de motifs d'oxyde de propylène, de motifs d'oxyde d'éthylène ou de mélanges de ceux-ci.

**3.** Utilisation selon l'une quelconque des revendications 1 à 2, dans laquelle la fonctionnalité hydroxyle du polyol de polyéther est 3-6, de préférence 3.

**4.** Utilisation selon l'une quelconque des revendications 1 à 3, dans laquelle le rapport molaire de l'anhydride ou de l'acide dicarboxylique sur le polyol de polyéther à l'étape i) est de 0,2:1 à 1,8:1, de préférence de 0,4:1 à 1,5:1, à condition qu'il soit égal ou inférieur à x:1, x étant la fonctionnalité hydroxyle du polyol de polyéther moins 1.

**5.** Utilisation selon l'une quelconque des revendications 1 à 4, dans laquelle le rapport molaire du monomère d'anhydride ou d'acide éthyléniquement insaturé à l'étape ii) sur l'anhydride ou l'acide dicarboxylique insaturé à l'étape i) est de 4:1 à 50:1, de préférence de 6:1 à 40:1.

**6.** Utilisation selon l'une quelconque des revendications 1 à 5, dans laquelle le monomère d'anhydride ou d'acide éthyléniquement insaturé est choisi parmi l'acide acrylique, l'acide méthacrylique, l'acide maléique, l'acide fumarique, l'acide crotonique, l'acide angélique, l'acide tiglique, l'acide citraconique, l'acide 2,3-diméthylmaléique, l'acide 3-buténoïque, l'acide itaconique, l'anhydride maléique, l'anhydride citraconique, l'anhydride 2,3-diméthylmaléique et des mélanges de ceux-ci, de préférence de l'acide acrylique.

**7.** Utilisation selon l'une quelconque des revendications 1 à 6, dans laquelle l'étape ii) est réalisée en présence d'un monomère supplémentaire éthyléniquement insaturé différent du monomère d'anhydride ou d'acide éthyléniquement insaturé, de préférence en présence de styrène.

**8.** Utilisation selon l'une quelconque des revendications 1 à 7, dans laquelle l'étape ii) est réalisée en présence d'un diluant, de préférence un polyol, de manière plus préférée un polyol de polyéther.

**9.** Procédé pour produire des dispersions de polyol à partir de polyuréthane, dans lequel le procédé comporte de faire réagir le polyuréthane avec un anhydride ou un acide dicarboxylique en présence d'un polymère tel que défini dans l'une quelconque des revendications 1 à 8 à une température de 150 °C à 250 °C.

**10.** Procédé selon la revendication 9, dans lequel le polymère est présent en une quantité de 1,5 à 40 % en poids, sur la base de la masse totale de la réaction, de préférence de 1,5 à 20 % en poids.

**11.** Procédé selon l'une quelconque des revendications 9 à 10, dans lequel le rapport pondéral de l'anhydride ou de l'acide dicarboxylique sur le polyuréthane est de 0,05:1 à 1:1, de préférence de 0,1:1 à 0,5:1.

**12.** Procédé selon l'une quelconque des revendications 9 à 11, dans lequel l'anhydride ou l'acide dicarboxylique est choisi parmi l'acide succinique, l'acide glutarique, l'acide maléique, l'acide malique, l'acide phtalique, l'acide adipique, l'anhydride succinique, l'anhydride glutarique, l'anhydride maléique, l'anhydride malique, l'anhydride phtalique, l'anhydride adipique et des mélanges de ceux-ci.

**13.** Dispersion de polyol pouvant être obtenue par un procédé selon l'une quelconque des revendications 9 à 12.

**14.** Utilisation de la dispersion de polyol selon la revendication 13 pour produire du polyuréthane, de préférence une mousse de polyuréthane.

**15.** Polyuréthane pouvant être obtenu par un procédé comportant de faire réagir la dispersion de polyol selon la revendication 13 avec un polyisocyanate.

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- DE 19512778 C1
- DE 102013106364 A1
- WO 2018091568 A1

- GB 1450511 A
- US 4454255 A
- US 4522976 A
- GB 2197657 A
- EP 1589051 A